# EUROPÄISCHE PATENTANMELDUNG

(11) **EP 4 759 892 A1**
(43) Veröffentlichungstag der Anmeldung: **17.06.2026**
(21) Anmeldenummer: 25214819.2
(22) Anmeldetag: 11.11.2025
(51) Int. Cl.: C09J 7/38, G09F 3/10

(54) **HAFTETIKETT**

(30) Priorität: 13.12.2024 DE 102024137562
(71) Anmelder: All4Labels Group GmbH, 22969 Witzhave (DE)
(72) Erfinder: Hantel, Gero-Constantin, 22969 Witzhave (DE)
(74) Vertreter: RGTH

(57) **Zusammenfassung**

Die Erfindung betrifft ein Haftetikett (100) zur Applikation auf einem Kunststoffbehälter (15), der aus Polypropylen (151) oder Polyethylen besteht und mittels Blasformen hergestellt ist, wobei das Haftetikett (100) ein Obermaterial (10), eine Beschichtung (11) aus einem Acrylat-Haftklebstoff (12) und einen Abziehstreifen (13) besitzt. Erfindungsgemäß ist vorgesehen, dass der Acrylat-Haftklebstoff (12) eine Anfangshaftung nach FTM 9 von größer/gleich 8 N/25 mm besitzt und ein Klebstoffauftragsgewicht von größer/gleich 18 g/m² aufweist.

## Beschreibung

Die Erfindung betrifft ein Haftetikett zur Applikation auf einen Kunststoffbehälter, der aus Polypropylen (PP) oder Polyethylen (PE) besteht und mittels Blasformen hergestellt ist, wobei das Haftetikett ein Obermaterial, eine Beschichtung aus einem Acrylat-Haftklebstoff und einen Abziehstreifen (Release Liner) besitzt.

Es ist nach dem Stand der Technik bekannt, Kunststoffbehälter, insbesondere Flaschen oder Tuben, die aus Polypropylen (PP) oder Polyethylen (PE) bestehen, mit Haftetiketten zu etikettieren. Solche etikettierten Kunststoffbehälter sind insbesondere bei Kosmetik- und Körperpflegeprodukten und bei Flüssigwaschmitteln bekannt.

Solche Kunststoffbehälter werden meist mittels Blasformen hergestellt und mit den Haftetiketten etikettiert, die im applizierten Zustand eine behälterseitige Beschichtung aus einem Acrylat-Haftklebstoff besitzen. Das Blasformen bezeichnet dabei ein Verfahren zur Herstellung der Kunststoffbehälter. Dabei wird ein Vorformling der Kunststoffbehälter in ein Blaswerkzeug (Blasform) eingeführt, mit Innendruck beaufschlagt und dadurch an die Konturen eines Blaswerkzeugs gedrückt, wodurch der Kunststoffbehälter die gewünschte Form annimmt. Das Blasformen gehört zu den Spritzgießverfahren und hat in der kunststoffverarbeitenden Industrie eine große Bedeutung bei der Herstellung von Flaschen, Behältern und sonstigen Hohlkörpern aus Kunststoff erlangt. Das Verfahren zeichnet sich vor allem dadurch aus, dass die gefertigten Teile vergleichsweise geringe Wandstärken aufweisen, wodurch der Materialaufwand gering ist und die Kosten niedrig gehalten werden können.

Es hat sich in der Praxis gezeigt ist, dass Haftetiketten, für die immer der gleiche Acrylat-Haftklebstoff verwendet wird, mit zunehmendem Alter bzw. mit zunehmender Abnutzung der Blaswerkzeuge weniger gut haften. Die Haftfähigkeit der Etiketten lässt also mit zunehmendem Alter und/oder mit zunehmender Abnutzung des Blaswerkzeugs nach und es entstehen Falten oder partielle Ablösungen der applizierten Haftetiketten.

Mit anderen Worten, es hat sich überraschenderweise gezeigt, dass die gleichen Haftetiketten, die auf älteren Kunststoffbehältern ein gutes Haftungsverhalten aufweisen, auf jüngeren Kunststoffbehältern nicht mehr hinreichend gut haften. Die Haftung von Etiketten auf Kunststoffbehältern, die mit vergleichsweise neuen (jungen) Blaswerkzeugen hergestellt wurden, ist gut und demgegenüber nicht mehr so gut auf Kunststoffbehältern, die mit älteren bzw. abgenutzten Blaswerkzeugen hergestellt wurden, wobei solche Blaswerkzeuge bei einem durchschnittlichen Gebrauchseinsatz in der Regel 2 bis 3 Jahre alt sind.

Diesbezügliche Untersuchungen offenbaren, dass Kunststoffbehälter, die mit Blaswerkzeugen hergestellt wurden, die älter als 2 bis 3 Jahre sind, eine Oberflächenspannung von ca. 28 Dyne aufweisen. Demgegenüber weisen Kunststoffbehälter, die mit neuen Blaswerkzeugen hergestellt wurden, eine Oberflächenspannung von 35 Dyne bis 38 Dyne auf. Die Oberflächenspannung von Kunststoffbehältern sinkt damit in Abhängigkeit des zunehmenden Alters und/oder der zunehmenden Abnutzung des verwendeten Blaswerkzeugs. Hierdurch erklärt sich die vergleichsweise gute Haftung von Haftetiketten an Kunststoffbehältern, die mit vergleichsweise jungen Blaswerkzeugen hergestellt wurden, denn durch die vergleichsweise höhere Oberflächenspannung kann der Haftklebstoff schneller eine gute und dauerhafte Haftung aufbauen.

Ferner hat sich gezeigt, dass die Oberfläche von Kunststoffbehältern, die mit einem vergleichsweise älteren und/oder abgenutzten Blaswerkzeug hergestellt wurden, eine höhere Rauigkeit besitzen. Auch eine altersbedingt zunehmende Rauigkeit der Oberflächen der Kunststoffbehälter verringert die Haftfähigkeit applizierter Haftetiketten.

Zur Vermeidung der Faltenbildung und/oder der partiellen Ablösungen von applizierten Haftetiketten wurde versucht, die Haftetiketten während des Etikettierprozesses mit einem vergleichsweise stärkerem Anpressdruck an den Kunststoffbehältern zu befestigen, was jedoch nicht zu dem gewünschten Erfolg geführt hat. Die Haftfähigkeit von applizierten Haftetiketten ist offenbar im Wesentlichen unabhängig von dem Anpressdruck bei der Applikation.

Die bloße Verwendung von Haftklebstoffen mit einer höheren Haftung kommen nicht ohne Weiteres in Betracht, weil diese Haftklebstoffe vergleichsweise weicher (viskoser) sind und es zu sog. Klebstoffbluten kommen kann. Das Klebstoffbluten entsteht insbesondere durch die straffe Wicklung der Etikettenbahnen bei der Verwendung von silikonisierten PET-Trägern. Der vergleichsweise weiche Haftklebstoff tritt dann, bedingt durch die straffe Wicklung, zwischen dem Folienobermaterial und dem PET-Träger aus und verursacht Störungen bei der späteren Etikettierung.

Hiervon ausgehend ist es die Aufgabe der vorliegenden Erfindung, ein Haftetikett anzugeben, das unabhängig vom Alter des verwendeten Blasformwerkzeugs eine dauerhafte Haftung an einem Kunststoffbehälter aufweist, auf den das Haftetikett aufgespendet ist.

Diese Aufgabe wird durch das Haftetikett nach Anspruch 1 gelöst. Erfindungsgemäß ist vorgesehen, dass der Acrylat-Haftklebstoff eine Anfangshaftung nach FTM 9 von größer/gleich 8 N/25mm, vorzugsweise größer/gleich 10 N/25mm, besitzt und ein Klebstoffauftragsgewicht von größer/gleich 18 g/m², vorzugsweise größer/gleich 19 g/m², aufweist. Die hier angesprochene Anfangshaftung (Loop-Tack) eines Selbstklebematerials wird gemessen als die Kraft, die benötigt wird, eine Schleife des Materials (Klebstoffseite außen), die mit einer quadratischen Standardprüffläche von 25 mm x 25 mm in Berührung gebracht wurde, mit einer vorgegebenen Geschwindigkeit zu trennen. Durch die besondere Kombination aus der Anfangshaftung und dem Klebstoffauftragsgewicht des verwendeten Haftklebstoffs ergibt sich in überraschender Weise eine dauerhaft zuverlässige Haftung der Haftetiketten auf Kunststoffbehältern, die aus PP oder PE bestehen und mittels Blasformen hergestellt sind. Unabhängig von dem Alter und/oder der Abnutzung des verwendeten Blaswerkzeugs wird eine dauerhafte Haftung der Haftetiketten auf solchen Kunststoffbehältern erzielt.

Vorteilhafte Weiterbildungen der Erfindung werden nachfolgend und in den Unteransprüchen angegeben.

Nach einer vorteilhaften Ausgestaltung der Erfindung ist vorgesehen, dass das Obermaterial aus Polyethylen (PE) oder Polypropylen (PP) besteht oder als Polyolefin-Mischfolie ausgebildet ist. PE besitzt eine hohe Anschmiegsamkeit/Flexibilität und ist daher bei Quetschtuben oder bei Kunststoffbehältern vorteilhaft, deren Mantelfläche zumindest lokal enge Krümmungsradien besitzt. PE ist allerdings nicht transparent, sondern milchig und wird daher in der Regel nicht für dunkle oder hochtransparente Kunststoffbehälter verwendet. PP ist demgegenüber transparent und besitzt eine vergleichsweise geringere Anschmiegsamkeit/Flexibilität. Damit ist PP gut für dunkle und hochtransparente Kunststoffflaschen geeignet, die insbesondere eine stabile und wenig nachgiebige Wandung aufweisen. PO-Mischfolien, also Folien, die rohstoffseitig sowohl PE- als auch PP-Bestandteile aufweisen, ordnen sich sowohl in Bezug auf die Transparenz als auch in Bezug auf die Anschmiegsamkeit/Flexibilität zwischen PE-Folien und PP-Folien ein und werden für Kunststoffbehälter eingesetzt, bei denen alle Eigenschaften gefordert sind.

Der Acrylat-Haftklebstoff ist vorzugsweise wasserbasiert ist oder ein UV-Hotmelt-Haftklebstoff. Bei wasserbasierenden Acrylat-Haftklebstoffen ist sowohl die Anfangshaftung nach FTM 9 sowie die Endhaftung nach FTM 1 durch die Klebstoffformulierung definiert. Wasserbasierende Acrylat-Haftklebstoffe sind meist bei den kostengünstigen Volumen Haftmaterialien im Einsatz.

Bei einem für die vorliegende Anwendung geeigneten permanentklebenden UV-Hotmelt-Acrylat-Haftklebstoff kann die Anfangs- und Endhaftung durch den Grad der UV-Vernetzung mittels der Wahl der UV-Lampen und der Bestrahlungsdauer eingestellt werden. UV-Hotmelt-Acrylat-Haftklebstoffe sind auch bei einer hohen Anfangs- und Endhaftung unanfällig in Bezug auf das sog. Klebstoffbluten, weshalb sich UV-Hotmelt-Acrylat-Haftklebstoffe als besonders geeignet für die Etikettierung von Kunststoffbehältern erwiesen haben.

Der Abziehstreifen besteht vorzugsweise aus silikonisiertem Glassine oder ist vorzugsweise als PET-Träger ausgebildet. PET-Träger werden typischerweise eingesetzt, wenn eine hohe Reissfestigkeit des Trägers benötigt wird und/oder Etiketten mit einer hohen Ausklarung auf der Flasche gewünscht sind, wie beispielsweise bei eine sog. No-Label-Look. Die hohe Ausklarung ergibt sich dadurch, dass PET-Träger eine vergleichsweise glatte Oberfläche aufweisen und bei der Applikation des Haftetiketts nur wenige Luftbläschen einschließen. Glassine-Träger werden demgegenüber für kosteneffiziente Haftmaterialien gewählt, wenn keine hohe Ausklarung des Klebstoffes erforderlich ist. Weil der Klebstoff während der Beschichtung auf den Glassine-Träger aufgebracht wird und dieser relativ rau ist, spiegelt sich später die Rauhigkeit des Trägers durch kleine eingeschlossenen Luftbläschen auf den Flaschen wieder.

Eine konkrete Ausführungsform des Haftetiketts wird nachfolgend mit Bezug auf die Figuren erläutert. Es zeigen:
Fig. 1: eine Querschnittsansicht eines Haftetiketts und
Fig. 2: eine Querschnittsansicht des applizierten Haftetiketts .

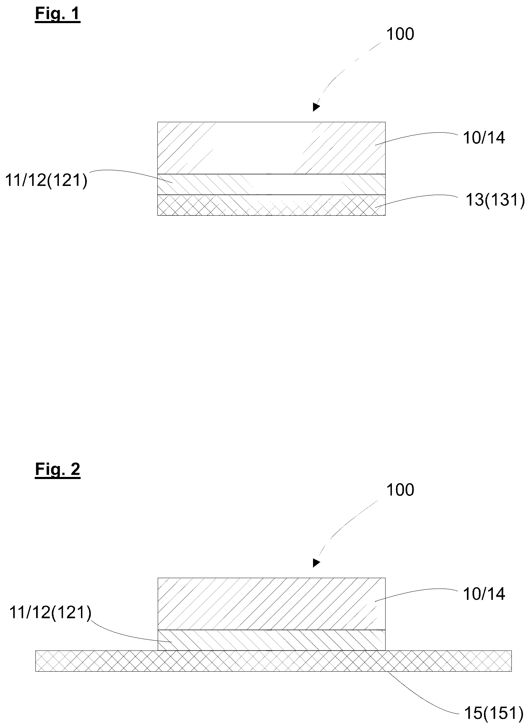

Fig. 1 zeigt eine Querschnittsansicht eines Haftetiketts 100, das zur Applikation auf einen (in Fig. 1 nicht gezeigten) Kunststoffbehälter ausgebildet ist, der aus Polypropylen (PP) oder Polyethylen (PE) besteht und mittels Blasformen hergestellt ist. Das Haftetikett 100 besitzt ein Obermaterial 10, eine Beschichtung 11 aus einem Acrylat-Haftklebstoff 12 und einen Abziehstreifen 13. Der Acrylat-Haftklebstoff 12 besitzt eine Anfangshaftung nach FTM 9 von 8 N/25 mm und weist ein Klebstoffauftragsgewicht von 18 g/m2 auf. Das Obermaterial 10 des Haftetiketts 100 ist aus Polyethylen 14 ausgebildet. Alternativ kann das Obermaterial 10 aus Polypropylen bestehen oder als Polyolefin-Mischfolie ausgebildet sein. Der Acrylat-Haftklebstoff 12 ist ein UV-Hotmelt-Acrylat-Haftlebstoff 121. Alternativ kann der Acrylat-Haftklebstoff wasserbasiert sein. Der Abziehstreifen 13 besteht aus silikonisiertem Glassine. Alternativ ist der Abziehstreifen 13 als PET-Träger ausgebildet.

Fig. 2 zeigt eine Querschnittsansicht des applizierten Haftetiketts 100, das in Fig. 1 dargestellt ist. Das Haftetikett 100 ist auf einem Kunststoffbehälter 15 appliziert, der im gezeigten Ausführungsbeispiel aus Polypropylen 151 besteht und mittels Blasformen hergestellt ist. Alternativ besteht der Kunststoffbehälter 15 aus Polyethylen. Die Haftung des Haftetiketts 100 ist aufgrund der besonderen Kombination aus Anfangshaftung und Klebstoffauftragsgewicht unabhängig vom Alter bzw. vom Abnutzungsgrad des Blaswerkzeugs, das zur Herstellung des Kunststoffbehälters 15 verwendet wurde.

### Bezugszeichen

- 100: Haftetikett
- 10: Obermaterial
- 11: Beschichtung
- 12: Acryl-Haftklebstoff
- 121: UV-Hotmelt-Acrylat-Haftklebstoff
- 13: Abziehstreifen
- 131: silikonisiertes Glassine
- 14: Polyethylen
- 15: Kunststoffbehälter
- 151: Polypropylen

## Patentansprüche

1. Haftetikett (100) zur Applikation auf einen Kunststoffbehälter (15), der aus Polypropylen (151) oder Polyethylen besteht und mittels Blasformen hergestellt ist, wobei das Haftetikett (100) ein Obermaterial (10), eine Beschichtung (11) aus einem Acrylat-Haftklebstoff (12) und einen Abziehstreifen (13) besitzt, **dadurch gekennzeichnet, dass** der Acrylat-Haftklebstoff (12) eine Anfangshaftung nach FTM 9 von größer/gleich 8 N/25 mm besitzt und ein Klebstoffauftragsgewicht von größer/gleich 18 g/m² aufweist.

2. Haftetikett (100) nach Anspruch 1, **dadurch gekennzeichnet, dass** das Obermaterial (10) aus Polyethylen (14) oder Polypropylen besteht oder als Polyolefin-Mischfolie ausgebildet ist.

3. Haftetikett (100) nach einem der vorhergehenden Ansprüche, **dadurch gekennzeichnet, dass** der Acrylat-Haftklebstoff (12) wasserbasiert ist oder ein UV-Hotmelt-Acrylat-Haftlebstoff (121) ist.

4. Haftetikett (100) nach einem der vorhergehenden Ansprüche, **dadurch gekennzeichnet, dass** der Abziehstreifen (13) aus silikonisiertem Glassine (131) besteht oder als PET-Träger ausgebildet ist.

5. Haftetikett (100) nach einem der vorhergehenden Ansprüche, **dadurch gekennzeichnet**, das der Acrylat-Haftklebstoff (12) eine Anfangshaftung nach FTM 9 von größer/gleich 10 N/25 mm besitzt.

6. Haftetikett (100) nach einem der vorhergehenden Ansprüche, **dadurch gekennzeichnet, dass** der Acrylat-Haftklebstoff (12) ein Klebstoffauftragsgewicht von größer/gleich 19 g/m² aufweist.
